# EUROPEAN PATENT APPLICATION

(11) **EP 4 596 150 A1**
(43) Date of publication of application: **06.08.2025**
(21) Application number: 23889046.1
(22) Date of filing: 03.11.2023
(51) Int. Cl.: B23B 31/10

(54) **BORING APPARATUS FOR PROCESSING SOFT JAW**

(30) Priority: 07.11.2022 KR 20220147437
(71) Applicant: Lee, Jung Hee, Gwangmyeong-si, Gyeonggi-do, 14256 (KR)
(72) Inventor: SHIN, Ho Youl, Ansan-si, Gyeonggi-do 15424 (KR)
(74) Representative: Nederlandsch Octrooibureau
(86) International application number: PCT/KR2023/017438
(87) International publication number: WO 2024/101784

(57) **Abstract**

The present invention relates to a boring apparatus for processing a soft jaw in a rack, comprising a boring adjustment plate which forms a spiral-shaped protrusion portion on the edge of a disc, and a jaw stopper portion which has a diameter that is the same as the spiral-shaped protrusion portion of the boring adjustment plate and is in surface-contact with the boring adjustment plate, and is coupled to the bolt hole of the soft jaw so as to control the movement of the soft jaw, wherein the boring adjustment plate and the jaw stopper portion are moved while maintaining the contact therebetween along the surface of the spiral-shaped protrusion portion due to the rotation of the boring adjustment plate to the left and right sides and control the movement of the soft jaw.

## Description

### [Technical Field]

The present disclosure relates to a soft jaw fixing apparatus of a lathe chuck, which is installed in a machine tool such as a CNC lathe or a compound machining center and fixes a soft jaw that firmly holds a workpiece so that the soft jaw can be machined according to the size of the workpiece, and also relates to an apparatus that is installed on an upper portion of the soft jaw and allows easy adjustment to a desired size to conveniently fix the soft jaw.

In addition, the present disclosure relates to a boring apparatus for machining a soft jaw such that the inner diameter of the soft jaw precisely contacts the workpiece in order to safely hold the workpiece in accurate concentricity when using a CNC lathe.

### [Background Art]

Generally, a chuck for a lathe is an apparatus that firmly fixes a workpiece which cannot be supported at the center by a machine tool such as a lathe or a milling machine, by using a soft jaw. A plurality of master jaws slidable on the lathe chuck are installed, and soft jaws are installed on upper portions of the respective master jaws, so that the workpiece is fixed in close contact by the soft jaws.

A round surface in an arc shape is formed on the soft jaw coupled to the master jaw so as to closely contact the outer diameter of the workpiece and to fix the workpiece without generating vibration or shaking during machining, and the round surface of the soft jaw must be cut according to the size of the workpiece. However, since the round surface of the soft jaw must vary depending on the size of the workpiece, it is necessary to precisely machine the round surface of the soft jaw in a variety of shapes.

As a conventional technology, Korean Patent Application Publication No. 2000-0063591 entitled "Jaw fixing apparatus for machining jaw of lathe chuck" is known.

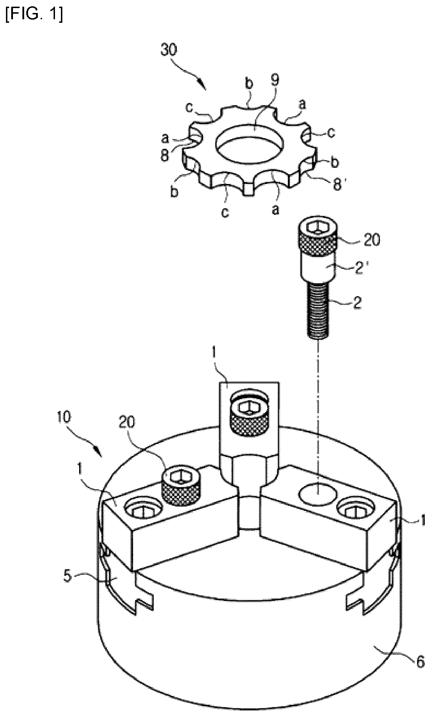

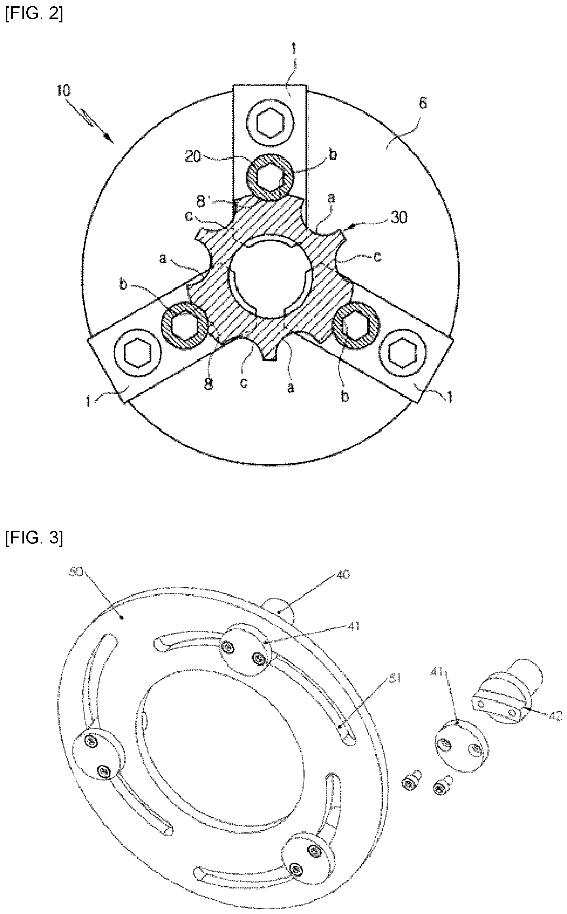

FIG. 1 is an exploded perspective view of a jaw fixing apparatus for machining a jaw of a lathe chuck according to the conventional technology, and FIG. 2 is a view illustrating a fixed state between the jaw and the clamping plate according to the conventional technology.

In the conventional technology, round grooves 8 and 8' are formed on the outer circumference of a clamping plate 30, and the structure is configured such that an annular protrusion 20 formed on a head of a cap screw 2 coupled to a soft jaw 1 is engaged with the round grooves 8 and 8', and thus an inner circumference of the soft jaw 1 arranged in a triangular shape is determined according to the depth of the round grooves 8 and 8' of the clamping plate 30. Accordingly, the soft jaw may be fixed with different inner circumferences according to the number of groove sets having different depths formed on the clamping plate 30. Ultimately, since the number of machining operations depends on the number of round grooves 8 and 8' formed on the clamping plate 30, it is very limited.

In addition, since the structure is configured to form round grooves on an outer circumference of the clamping plate 30 and to fix the cap screw by bringing an annular protrusion of the cap screw into close contact with the round grooves, the annular protrusion 20 is fixed in a state of pushing the round grooves 8 and 8' on the outer circumference of the clamping plate 30 toward a center by a force that tightens the master jaw 4 toward the center. Therefore, since only a one-directional force is used, there is a drawback in that the inner circumference of the soft jaw 1 is limited only by the depth of the round grooves 8 and 8'.

FIG. 3 is a view illustrating a state of a soft jaw fixing apparatus of a lathe chuck according to the conventional technology.

A plurality of spiral grooves 51 are circularly formed in a boring plate 50, and an adjustment slide 40 is movably coupled to the spiral grooves and mounted in a bolt hole of the soft jaw to perform machining, and at this time, the bolt hole of the soft jaw must be aligned with the coupling position of the adjustment slide 40 for coupling, which causes difficulty in alignment.

In addition, when machining a soft jaw in order to hold a workpiece on a chuck for a CNC lathe, a master ring having a diameter smaller than that of the workpiece is held to machine the soft jaw, and when attempting to machine the soft jaw using such a method, a plurality of master rings having different diameters must be prepared in advance before machining the soft jaw, and there is a hassle of finding a master ring having a suitable diameter among the plurality of master rings.

### [Disclosure]

### [Technical Problem]

The present disclosure has been devised to solve the above-described problems, and an object of the present disclosure is to provide a boring tool for machining a soft jaw that allows precision machining of an inner diameter of the soft jaw without having to hold a plurality of master rings.

An object of the present disclosure is to provide a boring apparatus for machining a soft jaw that allows a clamping width to be precisely adjusted when machining the inner diameter of the soft jaw, and that enables machining of the minimum inner diameter when re-machining a previously machined soft jaw.

### [Technical Solution]

To achieve the above objects, a boring apparatus for machining a soft jaw according to an embodiment of the present disclosure is disclosed.

The jaw stopper coupled to the soft jaw is formed with a stopper pin that is inserted into a bolt hole of the soft jaw, and a boring adjustment plate that comes into contact with the jaw stopper and determines a machining diameter of the soft jaw has a circular through-hole therein and a spiral-shaped protrusion surface formed at an edge thereof. The spiral-shaped protrusion surface includes, on both sides thereof, an outer surface having the smallest radius and an outer surface having the largest radius from a center of the circular through-hole, and a spiral shape in which the length of the radius increases regularly is formed between the two outer surfaces.

The spiral-shaped protrusion surface corresponds to the number of soft jaws attached to the chuck for a lathe. In one embodiment, since three soft jaws are coupled to three master jaws, three spiral-shaped protrusion surfaces are formed.

After stopper pins of three jaw stoppers are inserted into the bolt holes of the three soft jaws coupled to the three master jaws, the boring adjustment plate is seated on a seating surface of the jaw stoppers. At this time, the outer surface of the spiral-shaped protrusion surface having the smallest radius is positioned to face a coupling portion of the jaw stopper.

When the boring adjustment plate is rotated in a direction in which the radius of the spiral-shaped protrusion surface increases, the spiral-shaped protrusion surface and a coupling surface of the jaw stopper come into contact while sliding.

When the spiral-shaped protrusion surface of the boring adjustment plate and the coupling surface of the jaw stopper come into contact while sliding, the jaw stopper gradually rotates and slides while being in contact with the spiral-shaped protrusion surface of the boring adjustment plate, and is completely pressed and brought into contact, and when the complete contact is achieved, the boring adjustment plate can no longer be rotated. At this time, when the hydraulic chuck operates the soft jaws in a direction in which the diameter increases, separation occurs between the two contact surfaces that have been brought into close contact, and the boring adjustment plate can be rotated further by the amount of the generated separation, and when the amount of rotation is determined while observing the indication scale of the jaw stopper and the measurement scale of the boring adjustment plate, the hydraulic chuck operates the soft jaws in a direction in which the diameter decreases, and the spiral-shaped protrusion surface of the boring adjustment plate and the coupling surface of the jaw stopper are brought into contact, thereby stopping the operation of the soft jaws and allowing the soft jaws to be machined.

### [Advantageous Effects]

As described in detail above, the boring apparatus according to the present disclosure is quickly mounted on an upper portion of a soft jaw coupled to a master jaw of a chuck of a CNC lathe, and allows precise and fine machining, thereby having an effect of significantly reducing a working time for a soft jaw machining operation, and compared with a conventional boring ring, enables machining of a larger diameter, thereby achieving a significant improvement in practicality.

### [Description of Drawings]

FIG. 1 is an exploded perspective view of a jaw fixing apparatus of a lathe chuck according to the conventional technology.
FIG. 2 is a view illustrating a fixed state between a jaw and a clamping plate according to the conventional technology.
FIG. 3 is a view illustrating a state of a soft jaw fixing apparatus of a lathe chuck according to the conventional technology.
FIG. 4 is an exploded view illustrating a boring apparatus for machining a soft jaw for explaining an embodiment of the present disclosure.
FIG. 5 is a view illustrating a jaw stopper 300.
FIG. 6 is a view illustrating a separation prevention part 320 on an upper portion of a stopper body 315 of the jaw stopper 300.
IGS. 7 and 8 are views illustrating a boring adjustment plate 200.

### [Best Mode]

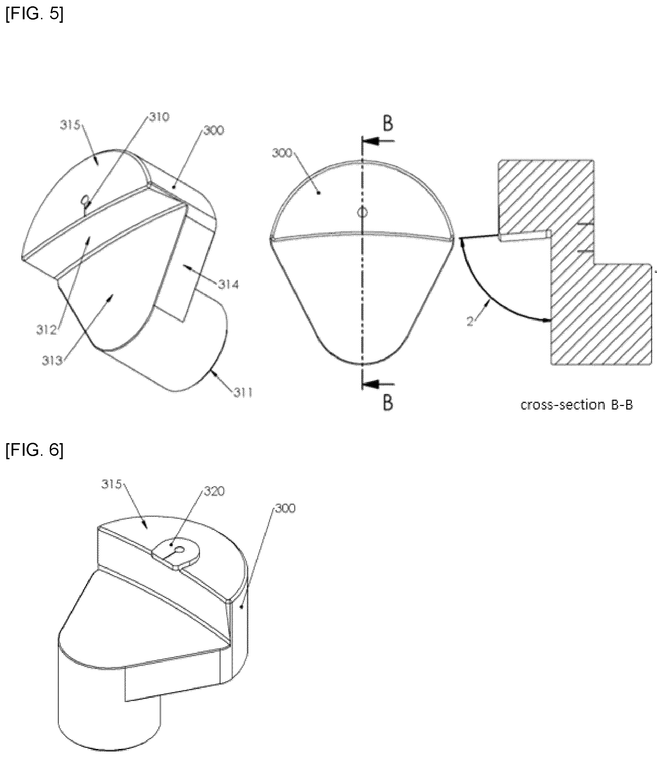

The best mode of the present disclosure is illustrated in FIG. 6. In order to enhance the prevention of separation of the boring adjustment plate 200 coupled to the stopper body 315 of FIG. 5, a separation prevention part is added, and a separation prevention part 320 is formed on an upper portion of the stopper body 315 of the jaw stopper 300 in FIG. 6.

### [Embodiments of the invention]

The present disclosure is capable of various modifications and may take on various forms, and specific embodiments are illustrated in the drawings and described in detail in the specification. However, this is not intended to limit the present disclosure to specific disclosed forms, and it is to be understood that all modifications, equivalents, and substitutions that fall within the spirit and scope of the present disclosure are included. Also, it should be noted that the shapes, sizes, and spacing of elements in the attached drawings may be reduced or exaggerated for clearer explanation.

The terminology used in the present application is merely for the purpose of describing particular embodiments and is not intended to limit the present disclosure. Singular expressions are intended to include plural expressions unless clearly indicated otherwise from the context. In the present application, the terms such as "include" or "have" are intended to specify the presence of features, numerals, steps, operations, components, parts, or combinations thereof described in the specification, and should be understood not to preclude the possibility of the presence or addition of one or more other features, numerals, steps, operations, components, parts, or combinations thereof.

Unless otherwise defined, all terms used herein, including technical and scientific terms, have the same meanings as commonly understood by those of ordinary skill in the art to which the present disclosure pertains. Terms that are generally used and defined in standard dictionaries shall be interpreted as having meanings consistent with the context of the relevant technology, and unless explicitly defined in the present application, such terms shall not be interpreted in an idealized or excessively formal manner.

In addition, in describing the present disclosure, detailed descriptions of related well-known functions are omitted when it is determined that such descriptions may unnecessarily obscure the gist of the present disclosure as they are obvious to those skilled in the art.

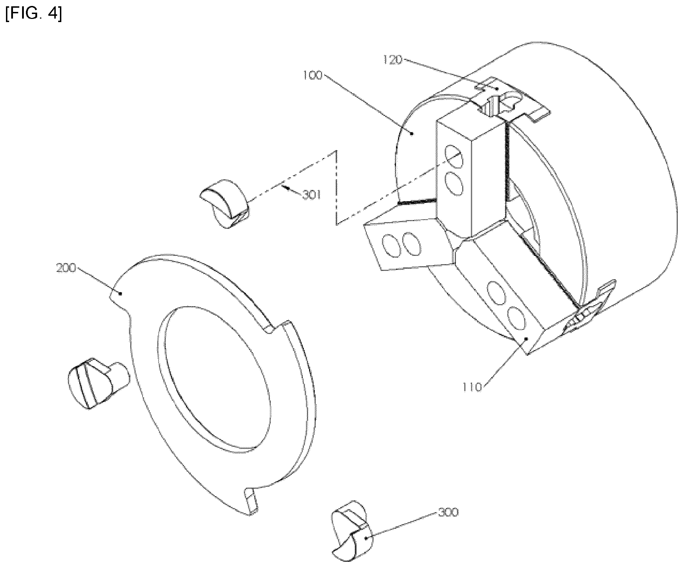

FIG. 4 is an exploded view illustrating a boring apparatus for machining a soft jaw for explaining an embodiment of the present disclosure.

A plurality of master jaws 120 that are slidable are installed on a chuck 100 for a lathe, and soft jaws 110 are installed on upper portions of the respective master jaws 120, and the configuration is such that a workpiece is fixed in close contact by the soft jaws 110. A plurality of bolt holes are formed in an upper portion of the soft jaw 110, and a stopper pin 311 of a jaw stopper 300 is inserted into the bolt holes along an assembly and disassembly line 301. In order to maintain contact between the jaw stopper 300 and the soft jaw 110, a magnet is inserted and fixed in the jaw stopper 300.

In the embodiment shown in FIG. 4, three jaw stoppers 300 are mounted on three soft jaws 110, and an adjustment plate seating surface 203 of a boring adjustment plate 200 is seated on stopper seating surfaces 313 of the three mounted jaw stoppers 300. The boring apparatus for machining a soft jaw according to the present disclosure is an apparatus for machining the soft jaw 110 by seating and fixing the boring adjustment plate 200 onto the stopper seating surface 313 of the jaw stopper 300.

FIG. 5 is a view illustrating the jaw stopper 300, and illustrates an isometric view, a top view, and a cross-sectional view taken along line B-B in the top view.

Referring to FIG. 5, the jaw stopper 300 is formed with a stopper pin 311 that is inserted into an upper bolt hole of the soft jaw 110, and a stopper body 315 is formed on an upper portion of the stopper pin 311. The stopper body 315 includes a stopper seating surface 313 and a coupling surface 312 on a front surface, an extension plate part 314 on a side surface, and a stopper scale 310 indicated on an upper portion.

On the front surface of the stopper body 315, a stopper seating surface 313 having a certain area in a direction parallel to the soft jaw 110 is formed, and the boring adjustment plate 200 is seated on the stopper seating surface 313.

In addition, the front surface of the stopper body 315 includes the coupling surface 312 formed in an inclined shape of an undercut and having a spiral shape so as to correspond to the spiral protrusion of the boring adjustment plate. As shown in the cross-sectional view taken along line B-B, the inclination angle 2 of the coupling surface 312 is less than 90 degrees.

FIG. 6 is a view illustrating a separation prevention part 320 on an upper portion of the stopper body 315 of the jaw stopper 300.

In the above embodiment, if an inclination angle 1 between the coupling surface 312 and the spiral-shaped protrusion surface 201 is small or becomes perpendicular, the downforce becomes weak, and there may be a case where the boring adjustment plate 200 is separated. At this time, in order to prevent separation of the boring adjustment plate 200, a separation prevention part 320 is formed on the stopper body 315, and an upper surface of the separation prevention part 320 may have an adjustment scale as needed.

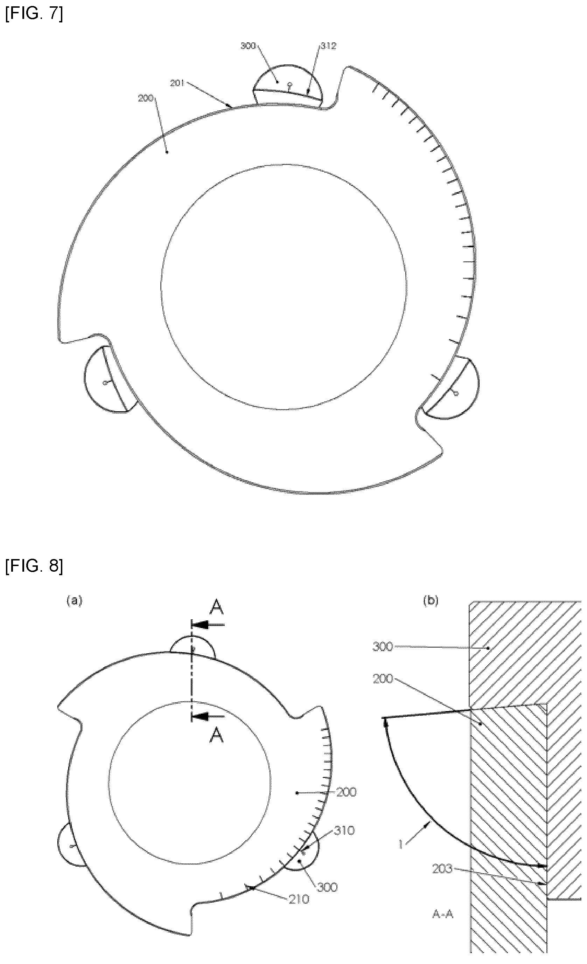

FIGS. 7 and 8 are views illustrating the boring adjustment plate 200.

The boring adjustment plate 200 has a circular through-hole therein, and a spiral-shaped protrusion surface 201 is formed at an edge thereof, and an adjustment plate scale 210 is marked along the spiral-shaped protrusion surface 201. The spiral-shaped protrusion surface 201 includes, on both sides thereof, an outer surface having the smallest radius and an outer surface having the largest radius from a center of the circular through-hole, and a spiral shape in which the radius length gradually increases is formed between the two outer surfaces.

The outer surface shape of the spiral-shaped protrusion surface 201 has a spiral surface that contacts the coupling surface 312 of the jaw stopper 300 and has the same inclination as that of the coupling surface 312. On a surface opposite to the adjustment plate scale 210, there is an adjustment plate seating surface 203 that contacts the stopper seating surface 313 of the jaw stopper 300, and as illustrated, having three spiral-shaped protrusion surfaces 201 is an example in the case where the number of soft jaws 110 configured in the chuck 100 for a lathe is three. Accordingly, the number of spiral-shaped protrusion surfaces 201 is the same as the number of soft jaws 110 depending on the configuration of the chuck 100 for a lathe.

FIG. 7 is a view illustrating a state in which the adjustment plate seating surface 203 of the boring adjustment plate 200 is initially seated on the stopper seating surface 313 of the jaw stopper 300. When the adjustment plate seating surface 203 of the boring adjustment plate 200 is initially seated on the stopper seating surface 313 of the jaw stopper 300, if the boring adjustment plate 200 is seated such that the outer surface of the spiral-shaped protrusion surface 201 having the smallest radius is in contact, the coupling surface 312 and the spiral-shaped protrusion surface 201 are seated with a spacing, and as the boring adjustment plate 200 is rotated in a direction in which the spiral-shaped protrusion surface 201 increases in radius, the coupling surface 312 and the spiral-shaped protrusion surface 201 come into contact and the spacing is eliminated, as shown in FIG. 8.

FIG. 8 illustrates a state in which, when the adjustment plate seating surface 203 of the boring adjustment plate 200 is seated on the stopper seating surface 313 of the jaw stopper 300 and the boring adjustment plate 200 is rotated in a direction in which the spiral-shaped protrusion surface 201 increases, the coupling surface 312 and the spiral-shaped protrusion surface 201 come into contact.

When the coupling surface 312 and the spiral-shaped protrusion surface 201 come into contact, the soft jaw 110 is allowed to move only in a direction from the center to the outer edge of the chuck 100 for a lathe, and the machine is operated to move the soft jaw 110 in a direction toward the outer edge of the chuck 100 for a lathe with reference to the stopper scale 310, and if spacing occurs between the coupling surface 312 and the spiral-shaped protrusion surface 201 at this time, the boring adjustment plate 200 is further rotated to adjust the position of the soft jaw 110.

When the position of the soft jaw 110 becomes appropriate by rotating the boring adjustment plate 200, and the machine is operated to move the soft jaw 110 toward the center of the chuck 100 for a lathe, the coupling surface 312 and the spiral-shaped protrusion surface 201 come into contact, and the movement of the soft jaw 110 is stopped, thereby completing preparation for machining the soft jaw 110.

FIG. 8(b) is a cross-sectional view taken along line A-A of FIG. 8(a). When the boring adjustment plate 200 and the jaw stopper 300 come into contact without spacing, the spiral-shaped protrusion surface 201 and the coupling surface 312 are arcs having the same diameter, so no gap occurs and surface contact is achieved. When the jaw stopper 300 strongly contacts the adjustment plate 200 by operation of the machine, the coupling surface 312 and the spiral-shaped protrusion surface 201 slide due to the inclination angle 1 between the two contact surfaces, and a downforce is generated in which the adjustment plate seating surface 203 strongly contacts the stopper seating surface 313, and due to the downforce thus generated, the adjustment plate 200 is not separated even when the chuck 100 for a lathe rotates at high speed.

The description of the presented embodiments is provided to enable a person of ordinary skill in the art to utilize or practice the present disclosure. Various modifications of these embodiments will be apparent to those skilled in the art of the present disclosure, and the general principles defined herein may be applied to other embodiments without departing from the scope of the present disclosure. Therefore, the present disclosure is not limited to the embodiments presented herein, but should be interpreted in the broadest scope consistent with the principles and novel features presented herein.

### [Industrial Applicability]

The present disclosure is a tool that significantly improves practicality by allowing users of CNC lathes to conveniently and quickly perform soft jaw machining operations when using a CNC lathe.

## Claims

1. A boring apparatus for machining a soft jaw, comprising:
a jaw stopper 300 including a stopper pin 311 inserted into a bolt hole of a soft jaw 110, and a stopper body 315 having a stopper seating surface 313 and a coupling surface 312 formed on a front surface of the stopper body 315, and having a stopper scale 310 marked on an upper portion of the stopper body 315; and
a boring adjustment plate 200 having a circular through-hole formed in the boring adjustment plate 200, and a spiral-shaped protrusion surface 201 formed at an edge of the boring adjustment plate 200, and having an adjustment plate scale 210 marked along the spiral-shaped protrusion surface 201,
wherein the boring adjustment plate 200 is seated and fixed on the stopper seating surface 313.

2. A boring apparatus for machining a soft jaw, comprising:
a boring adjustment plate 200 formed as a disk having a through-hole at a center of the boring adjustment plate 200, and having a spiral-shaped protrusion surface 201 formed at an edge of the boring adjustment plate 200 ; and
a jaw stopper 300 configured to come into surface contact with the spiral-shaped protrusion surface 201 of the boring adjustment plate 200 and to be coupled to a bolt hole of the soft jaw to control movement of the soft jaw,
wherein the jaw stopper 300 is configured to move while maintaining contact along the surface of the spiral-shaped protrusion surface 201 by leftward and rightward rotation of the boring adjustment plate 200 to control the movement of the soft jaw.

3. The boring apparatus for machining a soft jaw according to any one of claims 1 to 2,
wherein the jaw stopper 300 includes the coupling surface 312 having an inclination corresponding to the spiral-shaped protrusion surface 201, and an inclination angle of the coupling surface 312 is less than 90 degrees.

4. The boring apparatus for machining a soft jaw according to claim 1,
wherein a separation prevention part 320 that prevents separation of the boring adjustment plate is formed on an upper portion of the stopper body 315.

5. The boring apparatus for machining a soft jaw according to any one of claims 1 to 2,
wherein the jaw stopper 300 and the spiral-shaped protrusion surface 201 are provided in the same number.

6. The boring apparatus for machining a soft jaw according to claim 1,
wherein when the boring adjustment plate 200 is seated on the stopper seating surface 313 of the jaw stopper 300 and rotated in a direction in which the spiral-shaped protrusion surface 201 increases, the coupling surface 312 comes into contact with the spiral-shaped protrusion surface 201.

7. The boring apparatus for machining a soft jaw according to any one of claims 1 to 2,
wherein the spiral-shaped protrusion surface 201 includes, on both sides thereof, an outer surface having the smallest radius and an outer surface having the largest radius from a center of the circular through-hole, and a spiral shape in which the radius increases regularly is formed between the two outer surfaces.

8. The boring apparatus for machining a soft jaw according to claim 1,
wherein a magnet is inserted and fixed in the stopper pin 311.
